# EUROPEAN PATENT SPECIFICATION

(11) **EP 1 931 885 B1**
(45) Date of publication and mention of the grant of the patent: **06.07.2011**
(21) Application number: 06790307.0
(22) Date of filing: 04.10.2006
(51) Int. Cl.: F16B 17/00, F16B 21/00

(54) **ELECTRONIC COMMUNICATION SYSTEM**
ELEKTRONISCHES KOMMUNIKATIONSSYSTEM
SYSTEME DE COMMUNICATION ELECTRONIQUE

(30) Priority: 04.10.2005 US 723817 P
(43) Date of publication of application: 18.06.2008
(73) Proprietor: Telezygology Inc., Chicago, IL 60610 (US)
(72) Inventor: RUDDUCK, Dickory, Chicago, IL 60611 (US); WILSON, John, Queensland 4073 (AU); SIZER, Geoff, Turramurra, NSW 2097 (AU); MCARTHUR, Adam, Roseville Chase, NSW 2069 (AU); KUDRNA, Otokar, Burr Ridge, IL (US); SEMENIK, Scott, St. Charles, IL 60175 (US)
(74) Representative: Hopley, Joanne Selina
(86) International application number: PCT/AU2006/001436
(87) International publication number: WO 2007/038830

(56) References cited:
- WO-A1-99/47819
- WO-A1-2004/001235
- WO-A1-2004/046568
- WO-A1-2004/082444
- WO-A1-2004/101216
- WO-A1-2005/047714
- FR-A1- 2 753 885
- DATABASE WPI Week 199702, Derwent Publications Ltd., London, GB; Class X23, AN 1997-016698, XP003011216 & JP 08 282 491 A (TOKAI RYOKYAKU TETUSDO KK) 29 October 1996

## Description

### FIELD OF THE INVENTION

This invention relates to an electronic method of communication between fasteners and between the user of such a device. The invention also relates to an electronic communication system linking a fastener to another device and/or a user.

### BACKGROUND OF THE INVENTION

The following references to and descriptions of prior proposals or products are not intended to be, and are not to be construed as, statements or admissions of common general knowledge in the art. In particular, the following prior art discussion does not relate to what is commonly or well known by the person skilled in the art, but assists in the understanding of the inventive step of the present invention of which the identification of pertinent prior art proposals is but one part.

Many devices comprise of fastening systems that must work together in order to perform desired functions. For example, fasteners can work together to guide the installation or removal of a passenger seat system or to hold together parts of machinery or to even hold a door closed. Fasteners are an integral part of the modem world. Many times, a device would work better if one fastener released or locked before another fastener released or locked in a series of events. However, this is not always possible to achieve using existing technology since human error or broken fasteners can affect or even hinder the desired function of a device.

WO 2004/001235 describes a fastener including a fastening element having a flexible beam, an engagement means and an actuating means attached to the fastening element and including a shape memory alloy material which is adapted to contract when activated, the beam moving upon contraction of the material between engagement and disengagement positions. This document also describes a fastener for use in a network of fasteners including address means which serve to distinguish between the fasteners within the network.

WO 2005/047714 describes a releasable fastening system having a pin and a locking cavity. The pin is intended for insertion in an aperture. A locking means engages the locking cavity of the pin when the pin is received in the aperture. The system also includes unlocking means which includes material adapted to contract when activated. In one embodiment, the pin and the locking cavity are provided with conductor pins for providing power and data connections for the fastening system.

At least in some embodiments, the present invention deals with an electronic means for communication between fasteners. Further comments regarding examples of such solutions are set out below.

### SUMMARY OF THE INVENTION

In accordance with a first aspect of the present invention there is provided an electronic means for communication of a signal between a fastener and another fastener or a user, as defined in claim 1.

In accordance with another aspect of the present invention there is provided a method for electronic communication of a signal between a first fastener and another fastener in a series of two or more fasteners, as defined in claim 5.

In accordance with a further aspect of the present invention there is provided a method for electronic communication of a signal between a first fastener and another fastener in a series of two or more fasteners, as defined in claim 6.

In accordance with a further aspect of the present invention there is provided an electronic communication system for communication of information from a fastener to at least one separate device, as defined in claim 7.

The electronic communication link means may include any suitable means for enabling electronic signals to be sent between electronic devices or from one device to another. For example, such link means may include electrical wiring, or electromagnetic means such as radio or infrared communication means. Preferably, however, the link means includes wiring physically linking the fastener to the separate device and, optionally, providing a means to deliver power to the fastener.

Preferably, this invention will emphasize the method of integrating a method for a fastener to communicate with a user or with other fasteners in a series. This invention provides a way for intelligent fasteners, such as those activated remotely, to communicate in a way that has not been possible before. Simply put, one fasteners action or inactions affects whether a user or another fastener receives an electronic signal indicating a desired function. Each fastener will preferably comprise of a fastener body and fastener base. It is appreciated that hat fasteners can be used in a variety of forms, such as stud fasteners, a strip fastener, or any other embodiment.

In a preferred setting, the fasteners will comprise of a material adapted to contract when activated. The material adapted to contract when activated is preferably shape memory alloy strip. Shape memory alloys are known and are usually made predominantly or wholly of titanium and nickel. They may also include other material, such as aluminium, zinc copper, and other similar materials. A shape memory alloy is capable of adopting one shape below a predetermined transition temperature and changing to a second shape once its temperature exceeds the transition temperature. Conversely, when the shape memory alloy cools below the transition temperature, it is capable of adopting the first shape again. In connection with the present invention, the shape memory alloy preferably contracts when heated in situ. Shape memory alloy strip currently available, such as that sold under the trade mark Nitinol, is capable of contracting for many cycles by about 3% when activated by heating.

Activation of the material adapted to contract when activated is preferably achieved through electrical resistance heating, with a wire feed to the assembly. Activation of the shape memory alloy strip can be initiated from a central location, using the wiring system of, for example, an aircraft or automobile. It is also within the scope of this invention that the activation is initiated by remote means, such as a hand held tool operating through the use of any suitable form of energy, including microwave, electric magnetic, sonic, infra-red, radio frequency and so on.

The scope of the invention is not necessarily limited to the use of shape memory alloy. Other material may also be useful, such as shape memory polymers and ferromagnetic shape-memory materials. Also, while activation may take place through heating, other means of activation may be suitable and are within the scope of this invention.

In this invention, the fasteners will preferably be activated in a remote manner, meaning that a user does not need to use a physical action to manipulate a fastener. This may happen by way of key fob or by way of an electric network within the device. However, it is anticipated that a fastener in this invention can experience physical manipulation to activate other fasteners in the series or to activate the method of indicating to a user that an event has occurred.

Each fastener base comprises an electronic circuitry. Such circuitry is necessary for remote activation. In the locked position, the fastener body makes a physical connection with the fastener base activating the electronic circuitry. In the unlocked position, the fastener body is separated from the fastener base.

In this invention, fasteners communicating with one another is integral for the function of the device. The method in which they do communicate is through wiring, The electronic method of communication, i.e. through the wiring, between fasteners can run outside the body of the fastener as a modular attachment to the fastener. The electronic method can also be easily anticipated as integrated within the fastener. The choice of electronic means depends on the device at issue. It is equally applicable for the fasteners to communicate with the user. To lock the fasteners of a device, the fastener body of one fastener is joined with the fastener base of that same fastener. The physical connection between the fastener base and the fastener body triggers a switch within the fastener signaling to an electronic means to communicate with another fastener. This communication notifies the second fastener to act in the manner desired. This same function can notify a user that a function has been performed.

It can also be anticipated that these fasteners can default to a locked position if such a feature is desired to protect the integrity of the device. In cases of electrical failure or some other unforeseen electrical problem, it is important to recognize that the fasteners can be designed to protect the overall integrity, design, and function of the device.

In an automobile setting, a fastener can be connected and indicate that a radio is functioning properly to an end user or could possibly pin point the source of any error. A series of fasteners can work together to release a removable seat in that same automobile or to indicate that a passenger seat is installed properly. While examples of the automotive nature are given, one skilled in the art will readily recognize applications in other industries.

### DETAILED DESCRIPTION OF THE DRAWINGS

Possible and preferred features of the present invention will now be described with particular reference to the accompanying drawings. However, it is to be understood that the features illustrated in and described with reference to the drawings are not to be construed as limiting on the broad scope of the invention. In the drawings:
FIG. 1 is a detailed view of a fastener in the locked position.
FIG. 2 is a detailed view of a fastener in the unlocked position.
FIG. 3 is a view of the electronic means communicating between two fasteners within a passenger seat for a vehicle.

### DETAILED DESCRIPTION OF THE PREFERRED EMBODIMENT

In a preferred embodiment, the electronic method for communication comprises at least one fastener 2, wiring 4, and electronic circuitry 6. The at least one fastener 2 comprises of a fastener base 8 and fastener body 10. The at least one fastener 2 can comprise of a series of fasteners communicating with each other or with a user. It is equally important to note that simply one fastener 2 can communicate with a user as well.

In this invention, the fastener 2 can communicate with another fastener 2 or with a user though wiring 4. The wiring can be a modular attachment to the fastener 2 running along the outside of the fastener 2 or the wiring can be fully integrated within the fastener.

In the series of fasteners, a fastener base 8 makes a physical connection with the fastener body 10. This connection flips a type of switch with the electronic circuitry 6. The electronic circuitry 6 sends a signal to the wiring 4 to tell another fastener 2 in the series to perform in a desired manner. It is just as readily anticipated that the wiring 4 can send a communication to the user of the device that the fastener 2 are performing a specific, desired function. The user can also be relayed a message that a series of fasteners is functioning in a proper manner as well, or also be alerted to the occurrence of a failure. One skilled in the art will recognize that the fastener body 10 and fastener base 8 can release connection from each other sending similar instructions to other fasteners or the user as it would when making a connection.

This method of communication utilizing wiring 4 can be an integral part of any device. Almost any device can benefit from an embodiment of a fastener 2 communicating with a user to indicate a function or malfunction. On that same note, a preferred embodiment of any device would benefit from its series of fasteners communicating with each other for optimal function. This method allows devices to achieve optimal function by relaying signals of performance.

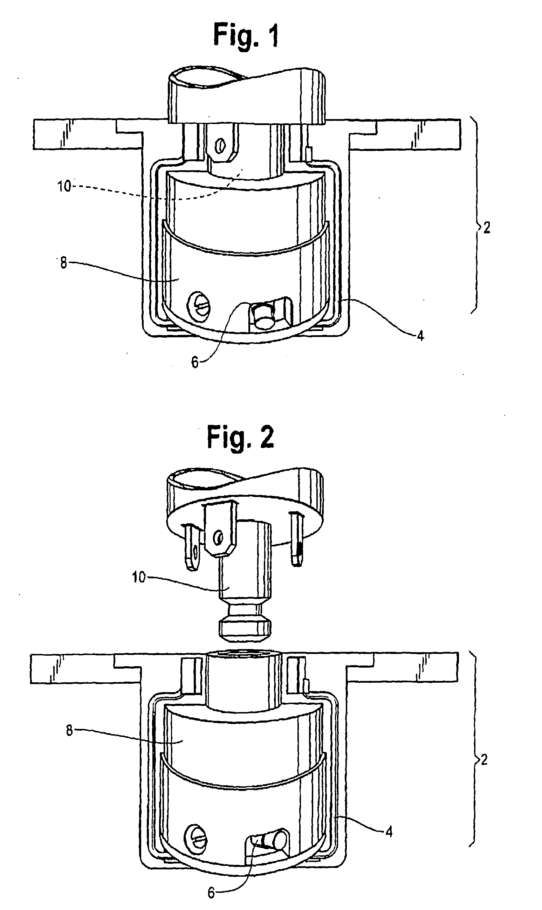

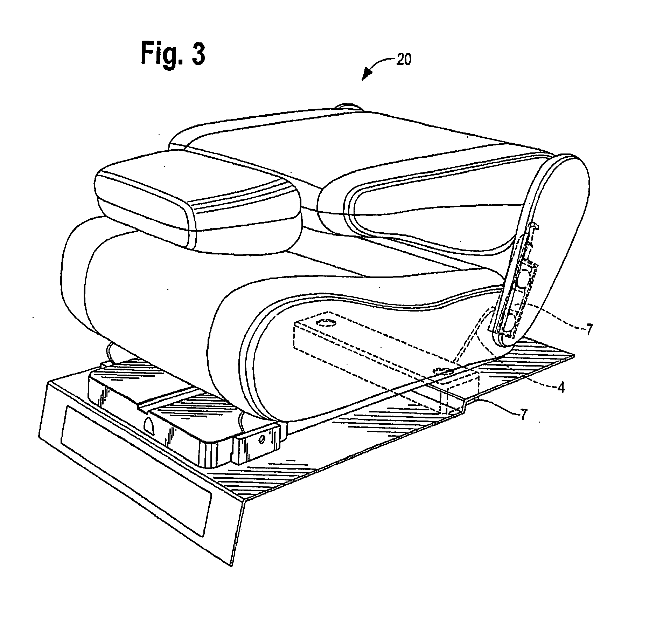

Figure 3 depicts this invention in a passenger seat setting. The fastener 2, and electronic circuitry 6 are at least partially contained in the box 7 In Figure 3, the wiring 4 connects the two fasteners in series. When one of the fasteners 2 is locked or unlocked as seen in Figures 1 and 2, that action is relayed to the other fastener in the series or to a user (not seen). In the case of the passenger seat 20, this method can be used to detect whether or not a seat is installed properly or is functioning properly.

Throughout the specification and claims the word "comprise" and its derivatives are intended to have an inclusive rather than exclusive meaning unless the contrary is expressly stated or the context requires otherwise. That is, the word "comprise" and its derivatives will be taken to indicate the inclusion of not only the listed components, steps or features that it directly references, but also other components, steps or features not specifically listed, unless the contrary is expressly stated or the context requires otherwise.

Orientational terms used in the specification and claims such as vertical, horizontal, top, bottom, upper and lower are to be interpreted as relational and are based on the premise that the component, item, article, apparatus, device or instrument will usually be considered in a particular orientation, typically with the fastener body 8 uppermost.

It will be appreciated by those skilled in the art that many modifications and variations may be made to the embodiments described herein without departing from the scope of the invention, as defined in the appended claims.

## Claims

1. An electronic means for communication of a signal between a fastener (2) and another fastener (2) or a user, said fastener (2) including:
a fastener body (10) having a catch portion; and
a fastener base (8) having a complementary receiving means for engageably
receiving said catch portion,
**characterized in that**
said fastener body (10) includes circuit completion means to electrically connect with terminal means in said fastener base (8) to complete an electronic circuit; and
said fastener base (8) includes wiring (4) to electrically communicate the connection of said circuit completion means with said terminal means to the other fastener (2) or said user.

2. The electronic means according to claim 1, wherein said fastener base (8) further includes a manual override switch that toggles between activation and deactivation positions of the fastener.

3. The electronic means of Claim 1 or 2, wherein said fastener (2) is one of a series of two or more fasteners.

4. The electronic means of Claim 1, wherein said wiring (4) can communicate fastener function to the user.

5. A method for electronic communication of a signal between a first fastener (2) and another fastener (2) in a series of two or more fasteners (2), said first fastener (2) including:
a fastener body (10) having a catch portion, said fastener body (10) including circuit completion means to electrically connect with terminal means to complete an electronic circuit; and
a fastener base (8) including said terminal means, a complementary receiving means for engageably receiving said catch portion and wiring to electrically communicate the connection of said circuit completion means with said terminal means to the other fastener (2),
said method including the steps of:
said fastener body (10) making connection with said fastener base (8) thereby locking said first fastener (2);
said connection switching said electronic circuit; and
said electronic circuit signalling to the other fastener (2) to activate or deactivate.

6. A method for electronic communication of a signal between a first fastener (2) and another fastener (2) in a series of two or more fasteners (2), said first fastener (2) including:
a fastener body (10) having a catch portion, said fastener body (10) including circuit completion means to electrically connect with terminal means to complete an electronic circuit; and
a fastener base (8) including said terminal means, a complementary receiving means for engageably receiving said catch portion and wiring (4) to electrically communicate the connection of said circuit completion means with said terminal means to the other fastener (2),
said method including the steps of:
said fastener body (10) releasing connection from said fastener base (8) to assume its unlocked state;
said connection release switching said electronic circuit; and
said electronic circuit signalling to the other fastener (2) to activate or deactivate.

7. An electronic communication system for communication of information from a fastener (2) to at least one separate device, said system including:
(a) the fastener (2) operable to close or open and including:
(i) a fastener body (10) having a catch portion; and
(iii) a fastener base (8) having a complementary receiving means for engageably receiving said catch portion;
(b) electronic circuitry (6) at least partially included in said fastener base (8) to detect the closed or open status of said fastener (2) and to generate the information relating to the open or closed status of said fastener (2); and
(c) electronic communication means linking said fastener (2) to the at least one separate device to communicate the information,
wherein:
said fastener body (10) includes circuit completion means to electrically connect with terminal means in said fastener base (8) to complete said electronic circuitry (6).

8. The system of Claim 7, wherein said electronic communication means includes electrical wire means linking said fastener (2) to the separate device.

9. The system of Claim 7, wherein said system is hardwired to a substrate having a power source.

10. The system of Claim 9, wherein said substrate is a vehicle, including an aircraft or an automobile, and said power source is derived from said vehicle's power source.

11. The system of Claim 7, wherein said electronic communication means is external to said fastener and is a modular component of said system.

12. The system of Claim 7, wherein said at least one separate device includes one or more fasteners (2).

13. The system of Claim 12, wherein said one or more fasteners (2) are of like type to said fastener (2).

14. The system of Claim 7, wherein said fastener (2) releasably and securely engages a first and a second item together.

15. The system of Claim 7, wherein said fastener (2) includes a component made of memory material that includes at least two shape configurations corresponding to the open and closed status of said fastener (2).

16. The system of Claim 7, wherein said at least one separate device is a remote device viewed and/or controlled by a user.

17. The system of Claim 7, wherein said electronic communication means includes wireless communication means linking said fastener (2) to the separate device.

18. The system of Claim 17, wherein said system includes an independent power source.

19. The system of Claim 18, wherein said independent power source includes a battery.

## Patentansprüche

1. Elektronisches Mittel zum Übertragen eines Signals zwischen einem Befestigungsmittel (2) und einem anderen Befestigungsmittel (2) oder einem Benutzer, wobei das genannte Befestigungsmittel (2) Folgendes beinhaltet:
einen Befestigungsmittelkörper (10) mit einem Einrastabschnitt; und
eine Befestigungsmittelbasis (8) mit einem komplementären Aufnahmemittel zum ineinandergreifenden Aufnehmen des genannten Einrastabschnitts,
**dadurch gekennzeichnet, dass** der genannte Befestigungsmittelkörper (10) ein Schaltkreisschließmittel zum elektrischen Verbinden mit Anschlussmitteln in der genannten Befestigungsmittelbasis (8) aufweist, um einen elektrischen Schaltkreis zu schließen; und
die genannte Befestigungsmittelbasis (8) Leitungen (4) aufweist, um dem anderen Befestigungsmittel (2) oder dem genannten Benutzer die Verbindung des genannten Schaltkreisschließmittels mit dem genannten Anschlussmittel elektrisch zu melden.

2. Elektronisches Mittel nach Anspruch 1, wobei die genannte Befestigungsmittelbasis (8) ferner einen manuellen Umgehungsschalter aufweist, der zwischen einer Aktivierungs- und einer Deaktivierungsposition des Befestigungsmittels schaltet.

3. Elektronisches Mittel nach Anspruch 1 oder 2, wobei das genannte Befestigungsmittel (2) eines aus einer Reihe von zwei oder mehr Befestigungsmitteln ist.

4. Elektronisches Mittel nach Anspruch 1, wobei die genannte Leitung (4) dem Benutzer eine Befestigungsmittelfunktion melden kann.

5. Verfahren zum elektronischen Übertragen eines Signals zwischen einem ersten Befestigungsmittel (2) und einem anderen Befestigungsmittel (2) in einer Reihe von zwei oder mehr Befestigungsmitteln (2), wobei das genannte erste Befestigungsmittel (2) Folgendes beinhaltet:
einen Befestigungsmittelkörper (10) mit einem Einrastabschnitt, wobei der genannte Befestigungsmittelkörper (10) Schaltkreisschließmittel zum elektrischen Verbinden mit Anschlussmitteln beinhaltet, um einen elektronischen Schaltkreis zu schließen; und
eine Befestigungsmittelbasis (8) mit dem genannten Anschlussmittel, ein komplementäres Aufnahmemittel zum ineinandergreifenden Aufnehmen des genannten Einrastabschnitts und Leitungen, um dem anderen Befestigungsmittel (2) die Verbindung des genannten Schaltkreisschließmittels mit dem genannten Anschlussmittel elektrisch zu melden,
wobei das genannte Verfahren die folgenden Schritte beinhaltet:
Herstellen einer Verbindung zwischen dem genannten Befestigungsmittelkörper (10) und der genannten Befestigungsmittelbasis (8), um **dadurch** das genannte erste Befestigungsmittel (2) zu verriegeln;
wobei die genannte Verbindung den genannten elektronischen Schaltkreis schaltet; und
wobei der genannte elektronische Schaltkreis dem anderen Befestigungsmittel (2) Aktivierung oder Deaktivierung signalisiert.

6. Verfahren zum elektronischen Übertragen eines Signals zwischen einem ersten Befestigungsmittel (2) und einem anderen Befestigungsmittel (2) in einer Reihe von zwei oder mehr Befestigungsmitteln (2), wobei das genannte erste Befestigungsmittel (2) Folgendes beinhaltet:
einen Befestigungsmittelkörper (10) mit einem Einrastabschnitt, wobei der genannte Befestigungsmittelkörper (10) Schaltkreisschließmittel zum elektrischen Verbinden mit Anschlussmitteln beinhaltet, um einen elektronischen Schaltkreis zu schließen; und
eine Befestigungsmittelbasis (8) mit dem genannten Anschlussmittel, ein komplementäres Aufnahmemittel zum ineinandergreifenden Aufnehmen des genannten Einrastabschnitts und Leitungen (4), um dem anderen Befestigungsmittel (2) die Verbindung des genannten Schaltkreisschließmittels mit dem genannten Anschlussmittel elektrisch zu melden,
wobei das genannte Verfahren die folgenden Schritte beinhaltet:
der genannte Befestigungsmittelkörper (10) löst die Verbindung mit der genannten Befestigungsmittelbasis (8), um den Entriegelungszustand einzunehmen;
die genannte Verbindungsauflösung schaltet den genannten elektronischen Schaltkreis; und
der genannte elektronische Schaltkreis signalisiert dem anderen Befestigungsmittel (2) die Aktivierung oder Deaktivierung.

7. Elektronisches Kommunikationssystem zum Übertragen von Informationen von einem Befestigungsmittel (2) zu wenigstens einer separaten Vorrichtung, wobei das genannte System Folgendes beinhaltet:
(a) das zu schließende und zu öffnende Befestigungsmittel (2), das Folgendes beinhaltet:
(i) einen Befestigungsmittelkörper (10) mit einem Einrastabschnitt; und
(ii) eine Befestigungsmittelbasis (8) mit einem komplementären Aufnahmemittel zum ineinandergreifenden Aufnehmen des genannten Einrastabschnitts;
(b) ein elektronischen Schaltkreis (6), der wenigstens teilweise in der genannten Befestigungsmittelbasis (8) enthalten ist, um den Schließ- oder Öffnungszustand des genannten Befestigungsmittels (2) zu erkennen und die Informationen über den Öffnungs- oder Schließzustand des genannten Befestigungsmittels (2) zu erzeugen; und
(c) elektronische Kommunikationsmittel, die das genannte Befestigungsmittel (2) mit der wenigstens einen separaten Vorrichtung verbinden, um die Informationen zu übertragen,
wobei:
der genannte Befestigungsmittelkörper (10) ein Schaltkreisschließmittel zum elektrischen Verbinden mit dem Anschlussmittel in der genannten Befestigungsmittelbasis (8) beinhaltet, um den genannten elektronischen Schaltkreis (6) zu schließen.

8. System nach Anspruch 7, wobei das genannte elektronische Kommunikationsmittel elektrische Leitungsmittel beinhaltet, die das genannte Befestigungsmittel (2) mit der separaten Vorrichtung verbinden.

9. System nach Anspruch 7, wobei das genannte System mit einem eine Stromquelle aufweisenden Substrat festverdrahtet ist.

10. System nach Anspruch 9, wobei das genannte Substrat ein Fahrzeug ist, einschließlich eines Flugzeugs oder eines Kfz, und die genannte Stromquelle von der Stromquelle des genannten Fahrzeugs abgeleitet ist.

11. System nach Anspruch 7, wobei sich das genannte elektronische Kommunikationsmittel außerhalb des genannten Befestigungsmittels befindet und eine modulare Komponente des genannten Systems ist.

12. System nach Anspruch 7, wobei die genannte wenigstens eine separate Vorrichtung ein oder mehrere Befestigungsmittel (2) aufweist.

13. System nach Anspruch 12, wobei die genannten ein oder mehreren Befestigungsmittel (2) von einem gleichen Typ wie das genannte Befestigungsmittel (2) sind.

14. System nach Anspruch 7, wobei das genannte Befestigungsmittel (2) einen ersten und einen zweiten Gegenstand lösbar und sicher miteinander in Eingriff bringt.

15. System nach Anspruch 7, wobei das genannte Befestigungsmittel (2) eine Komponente aus einem Gedächtnismaterial aufweist, das wenigstens zwei Formkonfigurationen aufweist, die dem Öffnungs- und dem Schließzustand des genannten Befestigungsmittels (2) entsprechen.

16. System nach Anspruch 7, wobei die genannte wenigstens eine separate Vorrichtung eine Fernvorrichtung ist, die von einem Benutzer betrachtet und/oder gesteuert werden kann.

17. System nach Anspruch 7, wobei das genannte elektronische Kommunikationsmittel drahtlose Kommunikationsmittel beinhaltet, die das genannte Befestigungsmittel (2) mit der separaten Vorrichtung verbinden.

18. System nach Anspruch 17, wobei das genannte System eine unabhängige Stromquelle beinhaltet.

19. System nach Anspruch 18, wobei die genannte unabhängige Stromquelle eine Batterie beinhaltet.

## Revendications

1. Moyen électronique pour la communication d'un signal entre un organe de fixation (2) et un autre organe de fixation (2) ou un utilisateur, ledit organe de fixation (2) comprenant :
un corps d'organe de fixation (10) ayant une partie loquet ; et
une base d'organe de fixation (8) ayant un moyen de réception complémentaire pour recevoir par engagement ladite partie loquet,
**caractérisé en ce que** ledit corps de l'organe de fixation (10) comprend un moyen de fermeture de circuit pour se connecter électriquement avec un moyen borne dans ladite base de l'organe de fixation (8) afin de fermer un circuit électronique ; et
ladite base de l'organe de fixation (8) comprend un câblage (4) pour communiquer électriquement la connexion dudit moyen de fermeture de circuit avec ledit moyen borne à l'autre organe de fixation (2) ou audit utilisateur.

2. Moyen électronique selon la revendication 1, dans lequel ladite base de l'organe de fixation (8) comprend en outre un commutateur prioritaire manuel qui alterne entre les positions d'activation et de désactivation de l'organe de fixation.

3. Moyen électronique selon la revendication 1 ou 2, dans lequel ledit organe de fixation (2) est un d'une série de deux organes de fixation ou plus.

4. Moyen électronique selon la revendication 1, dans lequel ledit câblage (4) peut communiquer le fonctionnement de l'organe de fixation à l'utilisateur.

5. Procédé pour la communication électronique d'un signal entre un premier organe de fixation (2) et un autre organe de fixation (2) dans une série de deux organes de fixation (2) ou plus, ledit organe de fixation (2) comprenant :
un corps d'organe de fixation (10) ayant une partie loquet, ledit corps de l'organe de fixation (10) comprenant un moyen de fermeture de circuit pour se connecter électriquement avec un moyen borne afin de fermer un circuit électronique ; et
une base d'organe de fixation (8) comprenant ledit moyen borne, un moyen de réception complémentaire pour recevoir par engagement ladite partie loquet et un câblage pour communiquer électriquement la connexion dudit moyen de fermeture de circuit avec ledit moyen borne à l'autre organe de fixation (2),
ledit procédé comprenant les étapes suivantes :
la connexion dudit corps de l'organe de fixation (10) avec ladite base de l'organe de fixation (8), verrouillant ainsi ledit premier organe de fixation (2) ;
la commutation dudit circuit électronique par ladite connexion ; et
l'envoi d'un signal par ledit circuit électronique à l'autre organe de fixation (2) pour qu'il s'active ou se désactive.

6. Procédé pour la communication électronique d'un signal entre un premier organe de fixation (2) et un autre organe de fixation (2) dans une série de deux organes de fixation (2) ou plus, ledit organe de fixation (2) comprenant :
un corps d'organe de fixation (10) ayant une partie loquet, ledit corps d'organe de fixation (10) comprenant un moyen de fermeture de circuit pour se connecter électriquement avec un moyen borne afin de fermer un circuit électronique ; et
une base d'organe de fixation (8) comprenant ledit moyen borne, un moyen de réception complémentaire pour recevoir par engagement ladite partie loquet et un câblage (4) pour communiquer électriquement la connexion dudit moyen de fermeture de circuit avec ledit moyen borne à l'autre organe de fixation (2),
ledit procédé comprenant les étapes suivantes :
la déconnexion dudit corps de l'organe de fixation (10) de ladite base de l'organe de fixation (8) pour que celui-ci entre dans son état déverrouillé ;
la commutation dudit circuit électronique par ladite déconnexion ; et
l'envoi d'un signal par ledit circuit électronique à l'autre organe de fixation (2) pour qu'il s'active ou se désactive.

7. Système de communication électronique pour la communication d'informations d'un organe de fixation (2) à au moins un dispositif séparé, ledit système comprenant :
(a) l'organe de fixation (2) pouvant être actionné pour se fermer ou s'ouvrir et comprenant :
(i) un corps d'organe de fixation (10) ayant une partie loquet; et
(ii) une base d'organe de fixation (8) ayant un moyen de réception complémentaire pour recevoir par engagement ladite partie loquet ;
(b) des circuits électroniques (6) au moins partiellement compris dans ladite base du corps de fixation (8) pour détecter l'état fermé ou ouvert dudit organe de fixation (2) et pour produire l'information concernant l'état ouvert ou fermé dudit organe de fixation (2) ; et
(c) un moyen de communication électronique reliant ledit organe de fixation (2) au au moins un dispositif séparé pour communiquer l'information,
dans lequel
ledit corps de l'organe de fixation (10) comprend un moyen de fermeture de circuit pour se connecter électriquement avec un moyen borne dans ladite base de l'organe de fixation (8) afin de fermer lesdits circuits électroniques (6) ;

8. Système selon la revendication 7, dans lequel ledit moyen de communication électronique comprend un moyen fil électrique reliant ledit organe de fixation (2) audit dispositif séparé.

9. Système selon la revendication 7, dans lequel ledit système est câblé à un substrat ayant une source d'énergie.

10. Système selon la revendication 9, dans lequel ledit substrat est un véhicule, y compris un aéronef ou une automobile, et ladite source d'énergie provient de ladite source d'énergie du véhicule.

11. Système selon la revendication 7, dans lequel ledit moyen de communication électronique est externe audit organe de fixation et est un élément modulaire dudit système.

12. Système selon la revendication 7, dans lequel ledit au moins un dispositif séparé comprend un ou plusieurs organes de fixation (2).

13. Système selon la revendication 12, dans lequel lesdits un ou plusieurs organes de fixation (2) sont de type similaire audit organe de fixation (2).

14. Système selon la revendication 7, dans lequel ledit organe de fixation (2) engage ensemble de manière amovible et sûre un premier et un deuxième article.

15. Système selon la revendication 7, dans lequel ledit organe de fixation (2) comprend un élément fait en un matériau à mémoire de forme qui comprend au moins deux configurations de formes correspondant à l'état ouvert et fermé dudit organe de fixation (2).

16. Système selon la revendication 7, dans lequel ledit au moins un dispositif séparé est un dispositif à distance observé et/ou commandé par un utilisateur.

17. Système selon la revendication 7, dans lequel ledit moyen de communication électronique comprend un moyen de communication sans fil reliant ledit organe de fixation (2) au dispositif séparé.

18. Système selon la revendication 17, dans lequel ledit système comprend une source d'énergie indépendante.

19. Système selon la revendication 18, dans lequel ladite source d'énergie indépendante comprend une batterie.
